(19)

**Europäisches Patentamt**
**European Patent Office**
**Office européen des brevets**

(11) **EP 1 914 516 A2**

(12) **EUROPÄISCHE PATENTANMELDUNG**

(43) Veröffentlichungstag:
**23.04.2008 Patentblatt 2008/17**

(51) Int Cl.:
***G01C 21/36*** *(2006.01)*

(21) Anmeldenummer: **07015681.5**

(22) Anmeldetag: **09.08.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **10.10.2006 DE 102006048182**

(71) Anmelder: **Navigon AG**
**20251 Hamburg (DE)**

(72) Erfinder: **Heuser, Michael**
**97084 Würzburg (DE)**

(74) Vertreter: **von den Steinen, Axel**
**advotec.**
**Patent- und Rechsanwälte**
**Beethovenstrasse 5**
**97080 Würzburg (DE)**

(54) **Navigationseinrichtung sowie Verfahren zur Darstellung einer Strassenkarte mit Isolinien**

(57)   Die Erfindung betrifft eine Navigationseinrichtung, beispielsweise für ein Kraftfahrzeug, sowie ein Verfahren zur simultanen Darstellung von Isolinien und einer Straßenkarte. Die Navigationseinrichtung umfasst eine Prozessoreinrichtung sowie eine Anzeigeeinrichtung zur Anzeige einer Straßenkarte

Die Erfindung zeichnet sich dadurch aus, dass die Prozessoreinrichtung zur Auswahl von Isoliniendaten und zur Darstellung von Isolinien (1, 2, 3, 4...) auf der Anzeigeeinrichtung eingerichtet ist, wobei die dargestellte Straßenkarte und die zur dargestellten Straßenkarte gehörigen Isolinien auf der Anzeigeeinrichtung überlagerbar sind.

Die Erfindung ermöglicht für den Nutzer eine deutlich bessere und intuitive Orientierung anhand der erweiterten Bildschirmdarstellung der Navigationseinrichtung. Das Verfahren und die Navigationseinrichtung gewährleisten eine technisch robuste und kostengünstig umzusetzende Kombination existierender Straßenkarten mit separaten Isoliniendaten auch beliebiger Drittherkunft.

Fig. 2

EP 1 914 516 A2

**Beschreibung**

Die Erfindung betrifft eine Navigationseinrichtung, insbesondere für ein Kraftfahrzeug, gemäß dem Oberbegriff von Patentanspruch 1, sowie ein Verfahren zur simultanen Darstellung von Isolinien auf einer Straßenkarte gemäß Patentanspruch 11.

Navigationseinrichtungen zur Bestimmung der momentanen Position, beispielsweise von Personen oder Fahrzeugen, oder zur Ermittlung und Anzeige von Fahrtrouten sind bekannt. Derartige Navigationseinrichtungen umfassen im Allgemeinen eine Anzeigeeinrichtung bzw. einen Bildschirm, wobei auf dem Bildschirm ein Ausschnitt einer Straßenkarte dargestellt werden kann. Üblicherweise zeigt der Bildschirm im Wesentlichen den Verlauf der Straßen und Wege innerhalb des angezeigten Kartenausschnitts, sowie zusätzlich zumeist einige Merkmale der Umgebung, wie beispielsweise die Umrisse von Gebäuden, Stadtteilen oder bewaldeten Gebieten.

Gattungsgemäße Navigationseinrichtungen sind zumeist in der Lage, die entsprechenden Straßenkarten in unterschiedlich großen Maßstäben anzuzeigen. Die Anzeige eines Kartenausschnitts in einem bestimmten Maßstab kann dabei beispielsweise infolge einer entsprechenden Befehlseingabe durch den Benutzer stattfinden, oder aber es kann eine automatische Auswahl eines bestimmten Kartenmaßstabs - insbesondere in Abhängigkeit vom derzeitigen Aufenthaltsort und/oder von der aktuellen Fortbewegungsgeschwindigkeit - erfolgen, dergestalt, dass zu jedem Zeitpunkt eine möglichst rasche und intuitive Orientierung anhand des angezeigten Kartenausschnitts möglich ist.

Dabei kann es jedoch dazu kommen, insbesondere bei größeren Kartenmaßstäben, die bei höheren Geschwindigkeiten oder während Überlandfahrten von der Navigationseinrichtung gewählt werden, dass auf dem Bildschirm der Navigationseinrichtung nur noch verhältnismäßig wenige Informationen angezeigt werden. Beispielsweise werden bei großen Kartenmaßstäben lediglich noch die wichtigsten Straßenverbindungen, größere bebaute Gebiete oder große Waldgebiete angezeigt. Dies kann - insbesondere in wenig besiedelten Gebieten - zur Folge haben, dass während einer Fahrt abgesehen von den Hauptstraßen nur noch sehr wenige bis gar keine Orientierungselemente auf der jeweiligen Bildschirmansicht dargestellt sind.

Hierunter leidet jedoch naturgemäß der Orientierungssinn des Benutzers, da dieser in einem solchen Fall aufgrund der Bildschirmdarstellung praktisch keine Anhaltspunkte erhält, die ihm erlauben, die Übereinstimmung der von der Navigationseinrichtung dargestellten Kartenansicht mit der tatsächlichen Umgebung bzw. Landschaft zu überprüfen. Eine Verschlechterung der Orientierung, insbesondere in unbekannten Gebieten, oder eine unter Umständen gefährliche Verunsicherung eines Kraftfahrzeugführers kann die Folge dieser im Stand der Technik vorhandenen Beschränkung bei der Kartendarstellung von Navigationseinrichtungen sein.

Mit diesem Hintergrund ist es die Aufgabe der vorliegenden Erfindung, eine Navigationseinrichtung bzw. ein Verfahren zur Darstellung einer Straßenkarte zu schaffen, mit der bzw. mit dem sich die genannten, im Stand der Technik vorhandenen Nachteile überwinden lassen. Insbesondere soll mit der Erfindung sowohl eine deutlich bessere und intuitive Orientierung anhand der Bildschirmdarstellung der Navigationseinrichtung ermöglicht werden; die Vorrichtung und das Verfahren sollen ferner möglichst einfach unter gleichzeitig großer Flexibilität eingesetzt werden können, und es soll auf der Produktseite eine kostengünstige Darstellbarkeit gegeben sein.

Diese Aufgabe wird durch eine Navigationseinrichtung gemäß Patentanspruch 1 bzw. durch ein Verfahren mit den Merkmalen des Patentanspruchs 11 gelöst.

Bevorzugte Ausführungsformen sind Gegenstand der Unteransprüche.

Die Navigationseinrichtung gemäß der Erfindung ist insbesondere, jedoch keineswegs ausschließlich, zur Ortsbestimmung und Navigation während der Fahrt mit einem Kraftfahrzeug vorgesehen. Hierzu umfasst die Navigationseinrichtung in für sich genommen zunächst einmal bekannter Weise eine Prozessoreinrichtung sowie eine Anzeigeeinrichtung zur Anzeige einer Straßenkarte.

Erfindungsgemäß zeichnet sich die Navigationseinrichtung jedoch dadurch aus, dass die Prozessoreinrichtung zur Auswahl von Isoliniendaten und zur Darstellung darin enthaltener Isolinien auf der Anzeigeeinrichtung eingerichtet ist. Dabei sind die auf der Anzeigeeinrichtung dargestellte Straßenkarte und die zur dargestellten Straßenkarte gehörigen Isolinien auf der Anzeigeeinrichtung überlagerbar.

Auf diese Weise lässt sich der Informationsgehalt der dargestellten Straßenkarte infolge der zusätzlichen Einbindung der Isolinien erheblich erweitern. Dies gilt insbesondere bei großen Kartenmaßstäben, bei denen reine Straßenkarten, wie eingangs ausgeführt, unter Umständen nur sehr wenige Details zur Orientierung des Benutzers in der tatsächlichen Umgebung anzeigen.

Für die Erfindung ist es dabei zunächst einmal nicht wesentlich, welche insbesondere geographischen Merkmale durch die Isolinien konkret repräsentiert werden, solange sich diese insbesondere geographischen Merkmale zur Erhöhung des Informationsgehalts der dargestellten Straßenkarte einsetzen lassen. Gemäß einer besonders bevorzugten Ausführungsform der Erfindung umfassen die Isoliniendaten jedoch Höhendaten in Form von Konturlinien gleicher Höhe.

Mittels solcher dergestalt in Form von Isolinien vorliegender Höhendaten, die somit geschlossene Konturlinien darstellen, wobei jede Konturlinie eine Linie gleicher Höhe im Gelände repräsentiert, kann eine erhebliche Verbesserung der Lesbarkeit und damit der intuitiven Orientierung auf der Karte erreicht werden. Denn auch für den Fall des vollständigen Wegfalls jeglicher anderer Orientierungsmerkmale auf der Karte kann der Benutzer dank der auf dem Bildschirm der Navigationseinrichtung dargestellten Konturlinien gleicher Höhe sich stets noch einen Eindruck von der Geländeform in seiner unmittelbaren Umgebung verschaffen. Auf diese Weise ist jederzeit ein einfacher und intuitiver Vergleich zwischen der Bildschirmdarstellung und der tatsächlichen Umgebung möglich, wodurch sich die Orientierung, insbesondere in unbekannter Umgebung, erheblich einfacher darstellen kann.

Gemäß einer weiteren, besonders bevorzugten Ausführungsform der Erfindung sind die von einer Isolinie umgrenzten Flächen entsprechend ihres Zahlenwerts mit einem bestimmten Farbwert oder mit einer bestimmten Graustufe hinterlegt bzw. gefüllt. Hiermit lässt sich eine noch bessere Erkennbarkeit und Unterscheidbarkeit der Isolinien erzielen. Ferner kann auf diese Weise - dank der unterschiedlichen Farbfüllung der einzelnen Konturlinien - auch eine scheinbar plastische Kartendarstellung erreicht werden, was die insbesondere während der Fahrt entscheidende, schnelle und intuitive Erkennbarkeit der auf der Straßenkarte dargestellten Situation erheblich verbessert. Von dieser Ausführungsform der Erfindung profitieren dabei nicht nur die üblichen 2D- bzw. Bird's-Eye-View-Kartendarstellungen. Vielmehr lässt sich auf diese Weise die Übersicht, gerade auch bei perspektivischen Kartendarstellungen wie 2½-D oder Quasi-3D, erheblich verbessern, dadurch, dass anhand der Isolinien die scheinbar dreidimensionalen Konturen bzw. Erhebungen und Senken der Landschaft erkennbar werden, womit eine schnelle Orientierung anhand intuitiven Vergleichs mit der tatsächlich vorhandenen Geländekontur möglich wird.

Die Erfindung lässt sich zunächst einmal unabhängig davon verwirklichen, in welcher Form die Isoliniendaten bereitgestellt und von der Prozessoreinrichtung verarbeitet werden, solange eine Kombinierbarkeit mit den der Straßenkarte zugrunde liegenden Daten gegeben ist.

Gemäß einer besonders bevorzugten Ausführungsform der Erfindung sind jedoch die Isoliniendaten in zumindest einer von der Straßenkarte unabhängigen, separaten Isoliniendatei aufgenommen. Dies bedeutet mit anderen Worten, dass die der Straßenkarte zugrunde liegenden Daten unabhängig von denjenigen Daten sind, die den Isolinien zugrunde liegen.

Dies ist insbesondere insofern vorteilhaft, als auf diese Weise die Darstellung der Isolinien auf der Anzeigeeinrichtung vollkommen unabhängig von der jeweils der Straßenkarte zugrunde liegenden Datenstruktur erfolgen kann. Insbesondere können auf diese Weise Isolinien ohne Weiteres auch bei solchen Straßenkarten eingeblendet werden, die selbst nicht über Isolinien-Informationen (wie beispielsweise Höhendaten) verfügen. Auch die Koordinatentransformation zur Darstellung einer Straßenkarte samt Isolinien in verschiedenen Ansichten, insbesondere in 2½-D oder Quasi-3D, kann infolge der separat bereitgestellten Isoliniendaten besonders einfach und zuverlässig erfolgen.

Ferner können infolge dieser Ausführungsform der Erfindung auch entweder die Daten der Straßenkarte unabhängig von den Isoliniendaten, oder aber umgekehrt die Isoliniendaten unabhängig von der Straßenkarte, verändert oder gegen ein Update bzw. gegen eine andere Datenbasis ausgetauscht werden, ohne dass dies die jeweils andere Datenbasis in irgendeiner Weise berührt. Ebenso gut können beispielsweise von unterschiedlichen Anbietern stammende Straßenkarten oder Isoliniendaten verwendet werden, ohne dass die gemeinsame Darstellung der Straßenkarte und der Isolinien auf der Anzeigeeinrichtung der Navigationseinrichtung beeinträchtigt wäre.

Gemäß einer weiteren, ebenfalls besonders bevorzugten Ausführungsform der Erfindung ist eine Isoliniendatei lediglich einem bestimmten begrenzten geographischen Gebiet auf der Straßenkarte zugeordnet. Dies bedeutet mit anderen Worten, dass die Isoliniendaten des darstellbaren geographischen Bereichs in einer Mehrzahl von Isoliniendateien enthalten sind, wobei jede Isoliniendatei die Isolinien lediglich für einen bestimmten Ausschnitt der Straßenkarte bzw. für ein bestimmtes geographisches Teilgebiet des geographischen Bereichs enthält.

Auf diese Weise wird eine bessere Strukturierung der Datenbasis erreicht, der benötigte Speicherbedarf bzw. Datenübertragungsbedarf zur Darstellung der Isolinien wird reduziert, und es werden jeweils nur diejenigen Isoliniendateien benötigt bzw. im Zugriff gehalten, die einem bestimmten, begrenzten Teilgebiet des geographischen Bereichs auf der Straßenkarte zugeordnet sind.

Nach einer weiteren, besonders bevorzugten Ausführungsform der Erfindung umfasst eine Isoliniendatei eine Mehrzahl von Dateiabschnitten, wobei jeder Dateiabschnitt die Isoliniendaten einer bestimmten geographischen Flächenkachel des der Isoliniendatei entsprechenden geographischen Gebiets enthält. Auf diese Weise kann ein besonders einfacher und schneller, insbesondere sequenzieller, Zugriff auf die Isoliniendaten für einen momentan dargestellten Ausschnitt der Straßenkarte erfolgen. Dabei ist lediglich ein Minimum an Datei- und Rechenoperationen notwendig, da nur die von dem momentan dargestellten Ausschnitt berührten Flächenkacheln berücksichtigt werden müssen und somit nur die entsprechenden Dateiabschnitte der betreffenden Isoliniendatei auszulesen sind.

Gemäß einer weiteren Ausführungsform der Erfindung ist vorgesehen, dass die Isoliniendaten in der Isoliniendatei in Form geschlossener Polygone enthalten sind. Dies führt zu einem besonders geringen Speicherbedarf und reduziert die zur Koordinatentransformation bzw. zur Anzeige der Isolinien notwendige Anzahl an Rechenoperationen, da die Eckpunkte eines Polygons sehr einfach und auch mit nur geringer Rechenleistung in die jeweils verwendete Kartenprojektion umgerechnet werden können.

Eine weitere, besonders bevorzugte Ausführungsform der Erfindung sieht vor, dass die Polygone in den Dateiabschnitten der Isoliniendatei sequenziell in der Zeichnungsreihenfolge angeordnet sind. Diese Ausführungsform bringt es mit sich, dass die jeweilige Isoliniendatei bzw. der entsprechende Dateiabschnitt einer Isoliniendatei, der einem momentan dargestellten Ausschnitt der Straßenkarte entspricht, rein sequenziell ohne Sprünge innerhalb der Datei abgearbeitet werden kann. Besonders bevorzugt sind dabei - im Sinne der Einsparung unnötiger Rechenoperationen - auch die Punktkoordinaten eines Polygons bzw. einer Isolinie in der Isoliniendatei sequenziell in derjenigen Reihenfolge angeordnet, in der die Punkte des Polygons auf den Bildschirm der Navigationseinrichtung gebracht werden.

Dies bedeutet mit anderen Worten, dass zur Erzeugung der mit einem momentan dargestellten Ausschnitt der Straßenkarte übereinstimmenden Isolinien die entsprechenden Daten des Dateiabschnitts einer Isoliniendatei sequenziell gelesen und an die Grafikeinheit weitergegeben werden können, wobei während des Auslesens der Isoliniendaten lediglich eine minimale Anzahl an Dateioffset-Lookups notwendig ist, um sämtliche für die momentane Bildschirmdarstellung notwendigen Isoliniendaten auszulesen. Dank dieser Ausführungsform der Erfindung kann somit eine flüssige Bildschirmdarstellung der Straßenkarte einschließlich der überlagerten Isolinien auch auf Navigationssystemen erfolgen, die mit einer verhältnismäßig geringen Rechenleistung ausgestattet sind.

Gemäß einer weiteren bevorzugten Ausführungsform der Erfindung ist vorgesehen, dass für ein und denselben geographischen Bereich mehrere Isoliniendateien, bzw. mehrere Sätze von Isoliniendateien, vorhanden sind. Dabei sind die mehreren Isoliniendateien, bzw. die mehreren Sätze von Isoliniendateien, jeweils unterschiedlichen Abbildungsmaßstäben zugeordnet. Auf diese Weise wird ermöglicht, dass für unterschiedliche Abbildungsmaßstäbe der Straßenkarte Isoliniendaten mit jeweils passender, optimierter Detailgenauigkeit verwendet werden können, ohne dass - beispielsweise bei der Darstellung von großen Kartenmaßstäben - von der Prozessoreinrichtung des Navigationsgeräts unnötig genaue und damit überflüssige Daten handzuhaben sind.

Die Erfindung betrifft ferner ein Verfahren zur simultanen Darstellung sowohl von Isolinien als auch einer Straßenkarte auf der Anzeigeeinrichtung einer Navigationseinrichtung. Dabei umfasst das erfindungsgemäße Verfahren die nachfolgend angegebenen Verfahrensschritte.

Zunächst erfolgt in einem ersten Verfahrenschritt die Feststellung der geographischen Position der Navigationseinrichtung bzw. die Übernahme einer bereits ermittelten geographischen Position. Anschließend wird in einem weiteren Verfahrenschritt der mit der ermittelten geographischen Position korrespondierende Ausschnitt einer Straßenkarte auf der Anzeigeeinrichtung dargestellt, bzw. die Anzeige des entsprechenden Ausschnitts der Straßenkarte auf der Anzeigeeinrichtung wird durch die Prozessoreinrichtung der Navigationseinrichtung vorbereitet.

Anschließend wird durch die Prozessoreinrichtung eine zu der ermittelten geographischen Position der Navigationseinrichtung und zum momentanen Maßstab der Straßenkarte passende Isoliniendatei ausgewählt. Danach erfolgt das Auslesen der von dem aktuellen Kartenausschnitt umfassten bzw. berührten Isolinien aus der ausgewählten Isoliniendatei. Schließlich erfolgt in einem weiteren Verfahrenschritt die Darstellung der Isolinien auf der Anzeigeeinrichtung mittels der entsprechenden Zeichenroutinen. Dabei findet eine Überlagerung der Isolinien und der Kartendarstellung statt.

Gemäß einer besonders bevorzugten Ausführungsform des erfindungsgemäßen Verfahrens sind dabei die Isoliniendaten in Form von Konturlinien gleicher Höhe aus Höhendaten gebildet. Durch den Einsatz von Konturlinien gleicher Höhe ergibt sich eine Verbesserung der Lesbarkeit und der intuitiven Orientierung des Benutzers auf der Karte, da auch die Geländeform der Umgebung mit Senken und Erhebungen anhand der zusätzlichen und gleichzeitigen Darstellung der Höhenlinien auf der Straßenkarte erkennbar wird.

Gemäß weiterer, besonders bevorzugter Ausführungsformen des erfindungsgemäßen Verfahrens sind die Isoliniendaten in zumindest einer von der Straßenkarte unabhängigen, separaten Isoliniendatei enthalten, bzw. es ist eine Isoliniendatei einem bestimmten, begrenzten Gebiet auf der Straßenkarte zugeordnet. Vorzugsweise umfasst dabei eine Isoliniendatei eine Mehrzahl von Dateiabschnitten, wobei jeder Dateiabschnitt der Isoliniendatei die Isoliniendaten einer bestimmten geographischen Flächenkachel enthält. Hierdurch ergibt sich ein besonders einfacher und schneller, sequenzieller Zugriff auf diejenigen Isoliniendaten, die einem momentan dargestellten bzw. darzustellenden Ausschnitt der Straßenkarte zugeordnet sind. Dies erfolgt mit einem Minimum an Dateizugriffs-und Rechenoperationen, da jeweils nur die von dem momentan dargestellten bzw. darzustellenden Kartenausschnitt berührten Flächenkacheln bzw. Dateiabschnitte berücksichtigt und ausgelesen werden müssen.

Gemäß weiterer bevorzugter Ausführungsformen des erfindungsgemäßen Verfahrens sind die Isoliniendaten in der Isoliniendatei in Form geschlossener Polygone enthalten, wobei die Polygone bzw. Isolinien innerhalb der Isoliniendatei sequenziell in der Reihenfolge der Erstellung auf dem Bildschirm bzw. auf der Anzeigeeinrichtung der Navigationseinrichtung angeordnet sind. Besonders bevorzugt sind dabei - im Sinne der Einsparung unnötiger Rechenoperationen - auch die Punktkoordinaten eines Polygons bzw. einer Isolinie in der Isoliniendatei sequenziell in derjenigen Reihenfolge angeordnet, in der die Punkte des Polygons auf den Bildschirm der Navigationseinrichtung gebracht werden.

Weitere Ausführungsformen des erfindungsgemäßen Verfahrens sehen vor, dass von einer Isolinie bzw. von einem Polygon umgrenzte Flächen bei der Anzeige auf dem Bildschirm der Navigationseinrichtung entsprechend ihres Zahlenwerts mit einem bestimmten Farbwert oder einer bestimmten Graustufe unterlegt werden, bzw. dass die Isolinien entsprechend der Reihenfolge ihres Zahlenwerts, also beispielsweise entsprechend zunehmender Höhe über Normalnull, nacheinander gezeichnet werden. Auf diese Weise lässt sich eine noch bessere Erkennbarkeit und scheinbar plastische Kartendarstellung dank der unterschiedlichen Einfärbung der von einer Isolinie umgrenzten Fläche erzielen. Dabei kann dank der Erstellung der Isolinien entsprechend der Reihenfolge ihres Zahlenwerts eine besonders einfache Erzeugung eines derartigen Reliefs auf dem Bildschirm mit besonders geringem Rechenaufwand erfolgen, da die Isolinien bzw. Polygone auf diese Weise nacheinander komplett gezeichnet und dabei jeweils komplett mit dem entsprechenden Farbwert ausgefüllt werden können, ohne dass die Flächen von Subpolygonen beim Ausfüllen des jeweiligen Superpolygons rechnerisch subtrahiert werden müssten.

Gemäß einer weiteren, bevorzugten Ausführungsform des erfindungsgemäßen Verfahrens ist schließlich vorgesehen, dass für ein und denselben geographischen Bereich eine Mehrzahl von Isoliniendateien, bzw. mehrere Sätze von Isoliniendateien, vorhanden sind. Die Mehrzahl an Isoliniendateien, bzw. die mehreren Sätze von Isoliniendateien, sind dabei jeweils unterschiedlichen Abbildungsmaßstäben zugeordnet und enthalten die Isolinien in dementsprechend unterschiedlicher Detailauflösung. Auf diese Weise wird es möglich, dass für unterschiedliche Abbildungsmaßstäbe der Straßenkarte Isoliniendaten mit jeweils passender, optimierter Detailgenauigkeit verwendet werden können. Gleichzeitig wird damit - beispielsweise bei der Darstellung von großen Kartenmaßstäben - vermieden, dass von der Prozessoreinrichtung des Navigationsgeräts unnötig genaue und damit unnötig umfangreiche Daten gehandhabt werden müssen.

Im Folgenden wird die Erfindung anhand lediglich Ausführungsbeispiele darstellender Zeichnungen näher erläutert.

Es zeigen:

Fig. 1    in schematischer Darstellung einen geographischen Bereich, innerhalb dessen sich eine Navigationseinrichtung befindet;

Fig. 2    in einer **Fig. 1** entsprechenden Darstellung den geographischen Bereich gemäß **Fig. 1** mit überlagert dargestellter Kachelung;

Fig. 3    in einer **Fig. 1** und **2** entsprechenden Darstellung den geographischen Bereich gemäß **Fig. 2** wieder mit überlagerter Kachelstruktur;

Fig. 4    in einer **Fig. 1** bis **3** entsprechenden, vergrößerten Darstellung einen Bereich der Bildschirmdarstellung einer Navigationseinrichtung sowie die Dateistruktur einer zugehörigen Isoliniendatei;

Fig. 5    in schematischer grafischer Darstellung die Dateistruktur einer Isoliniendatei gemäß **Fig. 4;**

Fig. 6    einen Bereich der Bildschirmdarstellung einer Navigationseinrichtung in der 2-D-Ansicht, und

Fig. 7    in einer **Fig. 6** entsprechenden Darstellung einen Bereich der Bildschirmdarstellung in 2½-D bzw. Quasi-3D-Ansicht; und

Fig. 8    in einer **Fig. 6** entsprechenden Darstellung eine Bildschirmdarstellung gemäß **Fig. 6** ohne Isolinien.

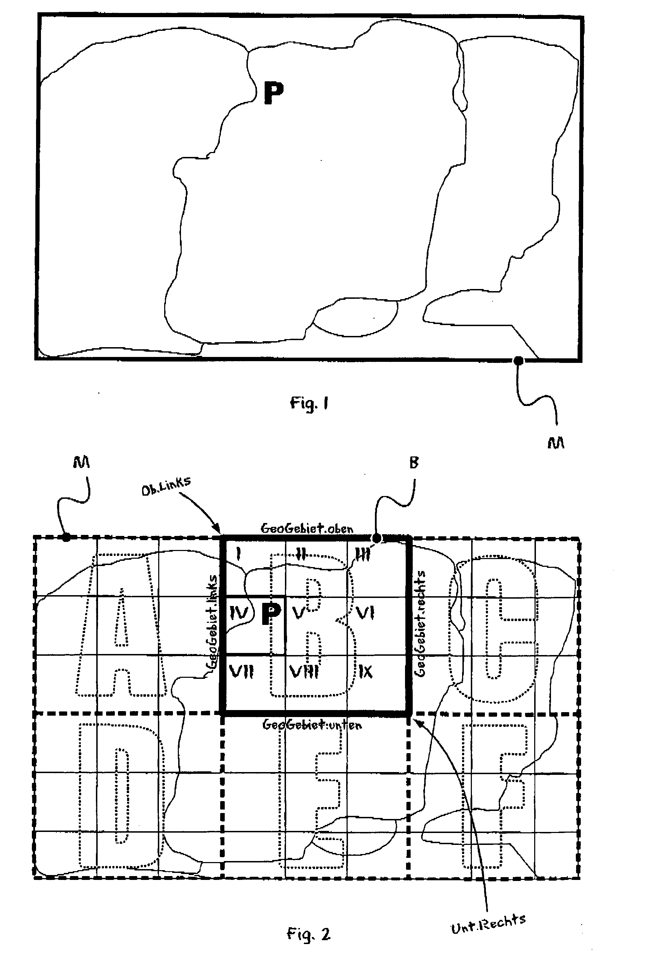

**Fig. 1** zeigt in schematischer Darstellung einen geographischen Bereich bzw. eine Landkarte M, innerhalb deren Kartenbereich sich die Navigationseinrichtung, beispielsweise das Navigationsgerät eines Kraftfahrzeugs, momentan befindet. Man erkennt einige schematisch dargestellte Gebietsgrenzen sowie die mit "P" markierte, von der Navigationseinrichtung festgestellte, momentane geographische Position P des Kraftfahrzeugs bzw. der Navigationseinrichtung.

**Fig. 2** zeigt denselben Kartenbereich M wie **Fig. 1,** wobei in **Fig. 2** der Kartenbereich M mit einem Gitternetz überzogen ist. Das Gitternetz entspricht dabei einer logischen Kachelaufteilung des Kartenbereichs M. Die Kachelaufteilung des Kartenbereichs M dient dazu, dass die dem Kartenbereich M zugeordneten Isoliniendaten - beispielsweise die Daten von Isohypsen bzw. Höhenlinien - genau strukturiert in entsprechenden Isoliniendateien abgelegt werden können.

Das in **Fig. 2** mit fetter Linie umrandete Quadrat B symbolisiert dabei den Umfang des geographischen Gebiets B bzw. den Umfang einer der sechs dem Kartenbereich M zugeordneten Isoliniendateien A, B, C, D, E, F. Dabei bestimmen sich die Koordinaten der Eckpunkte [Top.Left] bzw. [Bot.Right] des Quadrats B anhand der gegebenen Grenzen des geographischen Gebiets B, [GeoGebiet.left], [GeoGebiet.right], [GeoGebiet.top], [GeoGebiet.bottom] wie folgt:

$$\text{Top.Left} = (\text{GeoGebiet.left}, \text{GeoGebiet.top})$$

und

$$\mathrm{Bot.Right = (GeoGebiet.right,\ GeoGebiet.bottom)}$$

Um dabei denjenigen Abschnitt IV bzw. diejenige Kachel IV der Isoliniendatei "B" zu referenzieren bzw. den entsprechenden Abschnitt IV innerhalb der Isoliniendatei "B" direkt anspringen zu können, innerhalb dessen sich die aktuelle geographische Position P des Navigationsgeräts befindet, ist es erforderlich, anhand der aktuellen geographischen Position P auf den entsprechenden Abschnitt IV der Isoliniendatei "B" zu schließen.

Dies erfolgt (am Beispiel des geographischen Gebiets B und darin der Kachel IV) vorzugsweise wie nachstehend angegeben.

**Referenzierung der Kachel-ID und der darin enthaltenen zu zeichnenden Isoliniendaten anhand der geographischen Position P (x, y) des Navigationsgeräts:**

a) Ermittlung der Anzahl der Spalten [Anzahl.Spalten] anhand der gegebenen Breite des geographischen Gebiets B [GeoGebiet.Width] sowie anhand der gegebenen Breite der Kacheln [Kachelgröße.x]:

$$\mathrm{•\ Anzahl.Spalten} $$
$$\mathrm{= 1 + (GeoGebiet.Width\ /\ Kachelgröße.x)*}$$

b) Ermittlung derjenigen Spalte [Aktuelle.Spalte], in der sich das Navigationsgerät am Standort P derzeit befindet, anhand der gegebenen linken Grenze [GeoGebiet.left] des geographischen Gebiets B, anhand der geographischen Breite [x] des momentanen Standorts P sowie anhand der gegebenen Breite der Kacheln [Kachelgröße.x]:

$$\mathrm{•\ Aktuelle.Spalte}$$
$$\mathrm{= minimum\ of}$$
$$\mathrm{\{(x - GeoGebiet.left)\ /\ Kachelgröße.x,\ Anzahl.Spalten - 1\}*}$$

c) Ermittlung der Anzahl der Zeilen [Anzahl. Zeilen] anhand der gegebenen Höhe des geographischen Gebiets B [GeoGebiet.Height] sowie anhand der gegebenen Höhe der Kacheln [Kachelgröße.y]:

$$\mathrm{•\ Anzahl.\ Zeilen}$$
$$\mathrm{= 1 + (GeoGebiet.\ Height\ /\ Kachelgröße.y)*}$$

d) Ermittlung derjenigen Zeile [Aktuelle.Zeile], in der sich das Navigationsgerät am Standort P derzeit befindet, anhand der gegebenen oberen Grenze [GeoGebiet.top] des geographischen Gebiets B, anhand der geographischen Länge [y] des momentanen Standorts P sowie anhand der gegebenen Höhe der Kacheln [Kachelgröße.y]:

$$\mathrm{•\ Aktuelle.Zeile}$$
$$\mathrm{= minimum\ of}$$
$$\mathrm{\{(y - GeoGebiet.top)\ /\ Kachelgröße.y,\ Anzahl.Zeilen - 1\}*}$$

e) Ermittlung der laufenden Nummer [Kachel.Nr] derjenigen Kachel, in der sich das Navigationsgerät am Standort P derzeit befindet:

$$\bullet \; \text{Kachel.Nr}$$

$$= \text{Aktuelle.Zeile} * \text{Anzahl.Spalten} + \text{Aktuelle.Spalte}$$

\*) Die Ziffer 1 wird jeweils addiert bzw. wieder abgezogen, um vorliegend mit ganzzahligen Integer-Variablen rechnen zu können. Da hierbei eventuell entstehende Kommastellen abgeschnitten werden, könnte jeweils eine Restzeile oder Restspalte am Rand des geographischen Gebiets verloren gehen. Daher wird der Einfachheit halber pauschal eine Zeile und eine Spalte zusätzlich gespeichert, unabhängig davon, ob diese jeweils teilweise gefüllt oder leer ist.

Beim dargestellten Beispiel gemäß **Fig. 1** und **2** ergibt sich daraus der Wert Kachel.Nr = 4 für die laufende Nummer derjenigen Kachel IV, welche den momentanen Aufenthaltsort P des Navigationsgeräts enthält. Der Standort P des Navigationsgeräts befindet sich somit in der Kachel IV.

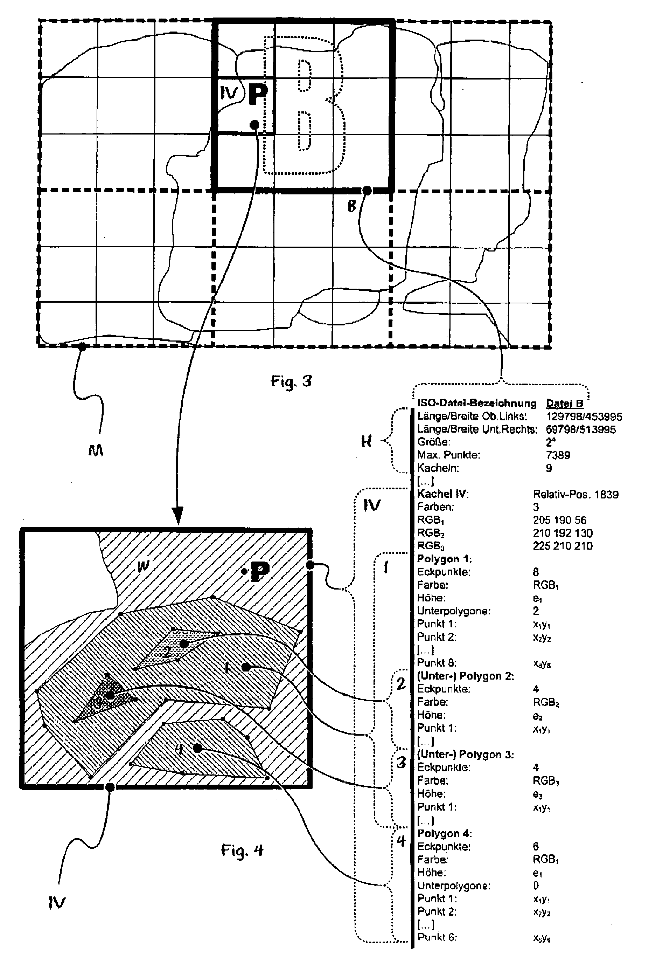

In den **Fig. 3** und **4** ist dargestellt, wie anhand der zuvor ermittelten Nummer der Kachel IV, deren geographische Lage der Position P des Navigationsgeräts entspricht, die zugehörigen Isoliniendaten ermittelt und auf den Bildschirm des Navigationsgeräts gebracht werden.

Hierzu muss vom Navigationsgerät lediglich zunächst die zum geographischen Gebiet B gehörige Isoliniendatei File B ausgewählt und anschließend innerhalb der ausgewählten Isoliniendatei B an diejenige Stelle 1839 gesprungen werden, die der zuvor ermittelten Kachel IV entspricht. Beim vorliegenden Beispiel beginnen die zur Kachel IV gehörigen Isoliniendaten in der Isoliniendatei File B an der mit dem Dateioffset-Pointer 1839 gekennzeichneten Stelle.

Das Navigationsgerät springt demzufolge an die mit dem Pointer 1839 gekennzeichnete Stelle in der Isoliniendatei B und muss nun nur noch die dort beginnenden Isolinien 1, 2, 3, 4... sukzessive abarbeiten bzw. die dort enthaltenen Polygondaten sukzessive auf den Bildschirm bringen.

Dieser Vorgang wird symbolisiert durch die Darstellung der **Fig. 4**, die auf der zeichnungsbezogen linken Seite zunächst einmal einen der Gebietskachel IV entsprechenden Bildschirmausschnitt des Navigationsgeräts mit einem auf dem Bildschirm dargestellten Gebietsmerkmal W (beispielsweise Bewaldung) sowie mit einer Anzahl von bereits gezeichneten Polygondaten bzw. Isolinien 1 bis 4 zeigt. Auf der zeichnungsbezogen rechten Seite von **Fig. 4** ist der zugehörige Dateibereich der dem geographischen Gebiet B gemäß **Fig. 3** zugeordneten Isoliniendatei B schematisch dargestellt.

Die Isoliniendatei B umfasst dabei zunächst einmal einen Dateiheader H, der Angaben zur Identifizierung der Datei (im Beispiel hier "File B"), Angaben zu der Größe des von der Isoliniendatei B abgedeckten geographischen Gebiets B sowie Angaben zur maximalen Anzahl an Eckpunkten pro Polygon 1, 2, 3, 4... umfasst. Letzteres dient insbesondere dazu, bereits im Vorfeld der eigentlichen Zeichnungsroutine einen entsprechenden Dateipuffer aus Platzgründen gerade so groß einzustellen, dass die maximal zu erwartende Polygongröße [max. points] gerade noch in den Dateipuffer passt.

Im Anschluss an den Dateiheader H sind in der Isoliniendatei B linear fortlaufend die Daten der neun Kacheln I bis IX der Isoliniendatei B enthalten, wobei für jede der Kacheln I bis IX die in der jeweiligen Kachel I bis IX enthaltenen Isolinicn 1, 2, 3, 4... bzw. die entsprechenden Polygondaten angegeben sind. Diese Daten umfassen insbesondere die Anzahl der in der jeweiligen Kachel I bis IX verwendeten Farben und die entsprechenden Farbwerte der Polygone 1, 2, 3, 4..., ferner die mit den Polygonen bzw. Isolinien 1, 2, 3, 4... verknüpften Zahlenwerte (im Fall von Isohypsen insbesondere die Höhe über Normalnull) sowie schließlich die eigentlichen Koordinaten der Eckpunkte der Polygondaten bzw. Isolinien 1, 2, 3, 4... Dabei sind wiederum sowohl die Daten der einzelnen Isolinien bzw. Polygone 1, 2, 3, 4... als auch die Daten der Eckpunkte jedes Polygons jeweils streng sukzessive linear angeordnet in der Isoliniendatei B enthalten.

Diese spezifische Anordnung der in der Isoliniendatei B enthaltenen Daten führt zu dem entscheidenden Vorteil, dass die entsprechenden Zeichnungsroutinen des Navigationsgeräts die Daten der Isoliniendatei B, beginnend am entsprechenden Dateioffset (im Beispiel Kachel IV mit Dateioffset 1839), ohne jegliche Dateisprünge abarbeiten können. Somit lassen sich die in der Isoliniendatei B enthaltenen Daten rein sukzessive und mit einem Minimum an Rechenoperationen durchlaufen, wodurch die Polygone bzw. Isolinien 1, 2, 3, 4... in der richtigen Reihenfolge - mit geringstem Rechenaufwand und höchstmöglicher Zeichengeschwindigkeit- auf den Bildschirm des Navigationsgeräts gebracht werden können.

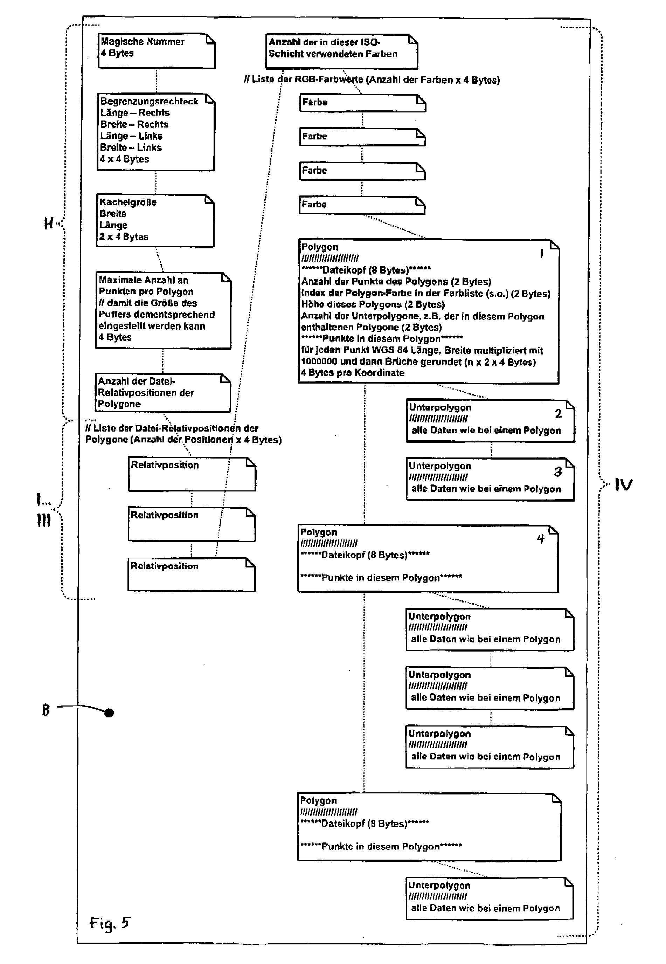

In **Fig. 5** ist nochmals in ausführlicherer und grafischer Form die Dateistruktur bei einem Ausführungsbeispiel für eine Isoliniendatei B dargestellt. Man erkennt insbesondere den Dateiheader H mit den kachelübergreifenden Angaben zu dem von der Isoliniendatei "File B" abgedeckten geographischen Gebiet B, sodann die hier als Platzhalter dargestellten Dateiabschnitte I, II, III, IV... mit den Informationen zu den einzelnen Kacheln I bis III sowie die für die Kachel IV ausführlich dargestellten Inhalte und Angaben zu den einzelnen in dieser Kachel IV enthaltenen Isolinien bzw. Polygonen und Subpolygonen 1, 2, 3, 4....

Auch hier wird wieder deutlich, dass anhand der speziellen, streng linearen Dateistruktur der dargestellten Isoliniendatei B eine besonders einfache und schnelle Berechnung und Darstellung der Isolinien 1, 2, 3, 4... auf dem Bildschirm der Navigationseinrichtung erfolgen kann. Zudem kann eine derartige Isoliniendatei - wie bereits weiter oben ausführlich beschrieben - mit den Daten einer beliebigen Straßenkarte kombiniert werden, wobei Straßenkarte und Isoliniendaten gleichzeitig stets vollkommen separat voneinander bereitgestellt, gehandhabt und gegebenenfalls ausgetauscht oder upgedated werden können.

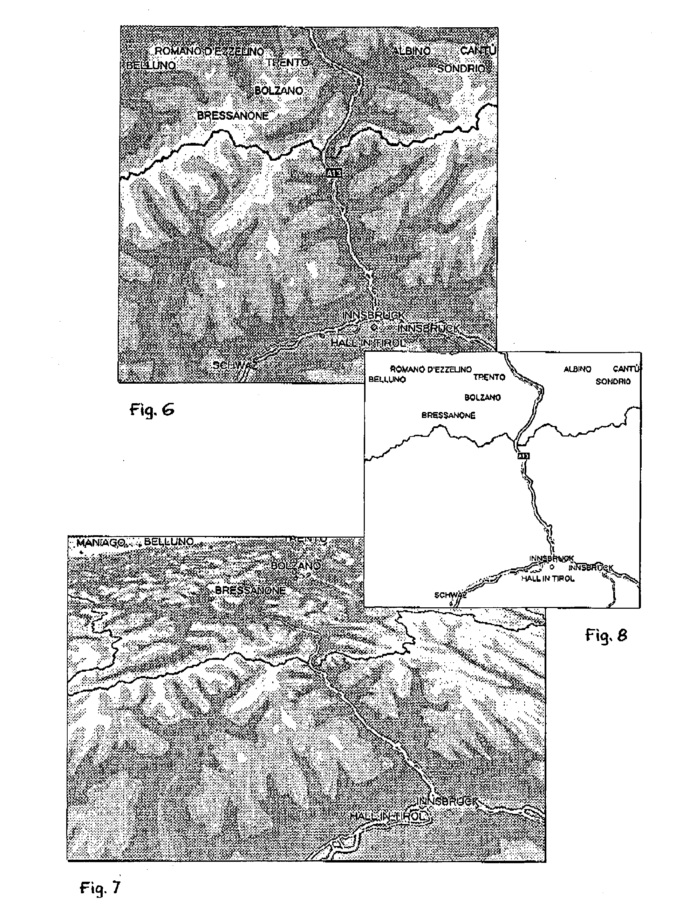

In den **Fig. 6** und **7** ist nochmals grafisch versinnbildlicht, welche entscheidenden Verbesserungen bei der Darstellung und intuitiven Erkennbarkeit einer Straßenkarte möglich sind, sofern auf der Straßenkarte zusätzlich entsprechende Isohypsen bzw. Höhenliniendaten angezeigt werden. Obwohl es sich sowohl bei der Darstellung von **Fig. 6** als auch von **Fig. 7** keineswegs um eine echte dreidimensionale Darstellung handelt, vermittelt insbesondere die perspektivisch gekippte 2½-D- bzw. Quasi-3D-Darstellung gemäß **Fig. 7**, aber auch die dem Bird's-Eye-View entsprechende 2D-Darstellung gemäß **Fig. 6**, ein geradezu plastisches Bild des Landschaftsreliefs anhand der in Abhängigkeit der Höhe über Normalnull unterschiedlich schattierten Isolinien.

Zum Vergleich ist in **Fig. 8** die exakt denselben Kartenausschnitt wie **Fig. 6** und **7** zeigende Straßenkarte nochmals ohne Isolinien und ohne entsprechende Grauschattierungen dargestellt. Man erkennt sofort den im Vergleich zu den Kartendarstellungen gemäß **Fig. 6** und **7** - beispielsweise für den Fahrer eines Kraftfahrzeugs - nur minimalen Informationsgehalt und die somit sehr beschränkten Orientierungsmöglichkeiten bei der Straßenkarte gemäß **Fig. 8.**

Im Ergebnis wird somit deutlich, dass sich dank der Erfindung die Qualität der Darstellung von Straßenkarten auf den Bildschirmen von Navigationsgeräten sowie die damit verbundene intuitive Orientierung des Benutzers in der Umgebung entscheidend verbessern lässt.

Insbesondere ermöglicht die Erfindung dabei eine konstruktiv und technisch einfach und damit kostengünstig umzusetzende Kombinierbarkeit existierender Straßenkarten mit separaten Isoliniendaten auch aus beliebiger Drittherkunft.

Die Erfindung liefert damit einen entscheidenden Beitrag zur Verbesserung bei der Darstellung von Straßenkarten auf Navigationsgeräten sowie zur Verbesserung der Orientierung und Sicherheit des Nutzers beim Einsatz von Navigationsgeräten insbesondere am Kraftfahrzeug.

**Bezugszeichenliste**

| | |
|---|---|
| M | Geographischer Bereich, Landkarte |
| P (x,y) | Aktuelle geographische Position |
| A, B, C, D... | Geographisches Teilgebiet, Isoliniendatei |
| I, II, III, IV... | Gebietskachel, Dateiabschnitt |
| 1, 2, 3, 4... | Isolinie, Isohypse, Polygon |
| H | Dateiheader |
| W | Gebietsmerkmal |
| [Anzahl.Spalten] | Anzahl der Spalten des geographischen Gebiets |
| [Anzahl. Zeilen] | Anzahl der Zeilen des geographischen Gebiets |
| [Aktuelle.Spalte] | Spalte des geographischen Gebiets, dic P enthält |
| [Aktuelle.Zeile] | Zeile des geographischen Gebiets, die P enthält |
| [GeoGebiet.Width] | Breite des geographischen Gebiets |
| [GeoGebiet. Height] | Höhe des geographischen Gebiets |
| [GeoGebiet.left] | linke/westliche Grenze des geographischen Gebiets |
| [GeoGebiet.right] | rechte/östliche Grenze des geographischen Gebiets |
| [GeoGebiet.top] | obere/nördliche Grenze des geographischen Gebiets |
| [GeoGebiet.bottom] | untere/südliche Grenze des geographischen Gebiets |
| [Top.Left] | Nordöstliche Eckkoordinate des geographischen Gebiets |
| [Bot.Right] | Südwestliche Eckkoordinate des geographischen Gebiets |
| [Kachelgröße.x] | Breite der Kachel |
| [Kachelgröße.y] | Höhe der Kachel |
| [Kachel.Nr] | laufende Nummer der Kachel, die P enthält |
| [max.points] | maximale Polygongröße der Isoliniendatei |

**Patentansprüche**

**1.** Navigationseinrichtung, insbesondere für ein Kraftfahrzeug, die Navigationseinrichtung umfassend eine Prozessoreinrichtung sowie eine Anzeigeeinrichtung zur Anzeige einer Straßenkarte,
**dadurch gekennzeichnet,**
**dass** die Prozessoreinrichtung zur Auswahl von Isoliniendaten und zur Darstellung von Isolinien (1, 2, 3, 4...) auf der Anzeigeeinrichtung eingerichtet ist, wobei die dargestellte Straßenkarte und die zur dargestellten Straßenkarte gehörigen Isolinien (1, 2, 3, 4...) auf der Anzeigeeinrichtung überlagerbar sind.

2. Navigationseinrichtung nach Anspruch 1,
**dadurch gekennzeichnet,**
**dass** die Isoliniendaten Höhendaten in Form von Konturlinien gleicher Höhe (1, 2, 3, 4...) umfassen.

3. Navigationseinrichtung nach Anspruch 1 oder 2,
**dadurch gekennzeichnet,**
**dass** von einer Isolinie (1, 2, 3, 4...) umgrenzte Flächen entsprechend ihres Zahlenwerts mit einem bestimmten Farbwert oder einer bestimmten Graustufe hinterlegt sind.

4. Navigationseinrichtung nach einem der Ansprüche 1 bis 3,
**dadurch gekennzeichnet,**
**dass** die Isoliniendaten in zumindest einer von der Straßenkarte unabhängigen, separaten Isoliniendatei (File A, B, C, D...) aufgenommen sind.

5. Navigationseinrichtung nach Anspruch 4,
**dadurch gekennzeichnet,**
**dass** die zumindest eine Isoliniendatei (File A, B, C, D...) einem bestimmten begrenzten Gebiet (A, B, C, D...) auf der Straßenkarte zugeordnet ist.

6. Navigationseinrichtung nach Anspruch 4 oder 5,
**dadurch gekennzeichnet,**
**dass** die Isoliniendatei (File A, B, C, D...) eine Mehrzahl von Dateiabschnitten (I, II, III, IV...) umfasst, wobei jeder Dateiabschnitt die Isoliniendaten einer bestimmten geographischen Flächenkachel (I, II, III, IV...) enthält.

7. Navigationseinrichtung nach einem der Ansprüche 4 bis 6,
**dadurch gekennzeichnet,**
**dass** die Isoliniendaten in der Isoliniendatei (File A, B, C, D...) in Form geschlossener Polygone (1, 2, 3, 4...) enthalten sind.

8. Navigationseinrichtung nach Anspruch 7,
**dadurch gekennzeichnet,**
**dass** die Polygone (1, 2, 3, 4...) in den Dateiabschnitten (I, II, III, IV...) der Isoliniendatei (File A, B, C, D...) sequenziell in der Zeichnungsreihenfolge angeordnet sind.

9. Navigationseinrichtung nach Anspruch 7 oder 8,
**dadurch gekennzeichnet,**
**dass** die Punktkoordinaten eines Polygons (1, 2, 3, 4...) in der Isoliniendatei sequenziell in der Zeichnungsrichtung des Polygons (1, 2, 3, 4...) angeordnet sind.

10. Navigationseinrichtung nach einem der Ansprüche 4 bis 9,
**dadurch gekennzeichnet,**
**dass** für einen geographischen Bereich (M) mehrere Isoliniendateien (File A, B, C, D...) bzw. mehrere Sätze von Isoliniendateien vorhanden sind, die jeweils unterschiedlichen Abbildungsmaßstäben zugeordnet sind.

11. Verfahren zur simultanen Darstellung von Isolinien (1, 2, 3, 4...) und einer Straßenkarte auf der Anzeigeeinrichtung einer Navigationseinrichtung, wobei die Navigationseinrichtung eine Prozessoreinrichtung umfasst, das Verfahren aufweisend die nachfolgenden Verfahrensschritte:

a) Ermittlung der geographischen Position (P) der Navigationseinrichtung;
b) Anzeige des mit der geographischen Position (P) korrespondierenden Ausschnitts der Straßenkarte auf der Anzeigeeinrichtung;
c) Auswahl einer zu der geographischen Position (P) und zum Maßstab der angezeigten Straßenkarte gehörigen Isoliniendatei (File A, B, C, D...) durch die Prozessoreinrichtung;

d) Auslesen der von dem angezeigten Kartenausschnitt umfassten Isolinien (1, 2, 3, 4...) aus der Isoliniendatei (File A, B, C, D...); und

e) Zeichnen der Isolinien (1, 2, 3, 4...) auf der Anzeigeeinrichtung, wobei eine Überlagerung der Isolinien (1, 2, 3, 4...) und der Kartendarstellung erfolgt.

12. Verfahren nach Anspruch 11,
    **dadurch gekennzeichnet,**
    **dass** die Isoliniendaten in Form von Konturlinien gleicher Höhe (1, 2, 3, 4...) aus Höhendaten gebildet sind.

13. Verfahren nach Anspruch 11 oder 12,
    **dadurch gekennzeichnet,**
    **dass** die Isoliniendaten in zumindest einer von der Straßenkarte unabhängigen, separaten Isoliniendatei (File A, B, C, D...) enthalten sind.

14. Verfahren nach Anspruch 13,
    **dadurch gekennzeichnet,**
    **dass** die zumindest eine Isoliniendatei (File A, B, C, D...) einem bestimmten begrenzten Gebiet (A, B, C, D...) auf der Straßenkarte zugeordnet ist.

15. Verfahren nach Anspruch 13 oder 14,
    **dadurch gekennzeichnet,**
    **dass** eine Isoliniendatei (File A, B, C, D...) eine Mehrzahl von Dateiabschnitten (I, II, III, IV...) umfasst, wobei jeder Dateiabschnitt die Isoliniendaten einer bestimmten geographischen Flächenkachel (I, II, III, IV...) enthält.

16. Verfahren nach einem der Ansprüche 13 bis 15,
    **dadurch gekennzeichnet,**
    **dass** die Isoliniendaten in der Isoliniendatei (File A, B, C, D...) in Form geschlossener Polygone (1, 2, 3, 4...) enthalten sind.

17. Verfahren nach Anspruch 16,
    **dadurch gekennzeichnet,**
    **dass** die Polygone (1, 2, 3, 4...) in der Isoliniendatei (File A, B, C, D...) sequenziell in der Zeichnungsreihenfolge angeordnet sind.

18. Verfahren nach Anspruch 16 oder 17,
    **dadurch gekennzeichnet,**
    **dass** die Punktkoordinaten eines Polygons (1, 2, 3, 4...) in der Isoliniendatei (File A, B, C, D...) sequenziell in der Zeichnungsrichtung des Polygons (1, 2, 3, 4...) angeordnet sind.

19. Verfahren nach einem der Ansprüche 11 bis 18,
    **dadurch gekennzeichnet,**
    **dass** von einer Isolinie (1, 2, 3, 4...) umgrenzte Flächen entsprechend ihres Zahlenwerts mit einem bestimmten Farbwert oder einer bestimmten Graustufe hinterlegt werden.

20. Verfahren nach einem der Ansprüche 11 bis 19,
    **dadurch gekennzeichnet,**
    **dass** die Isolinien (1, 2, 3, 4...) entsprechend der Reihenfolge ihres Zahlenwerts gezeichnet werden.

21. Verfahren nach einem der Ansprüche 13 bis 20,
    **dadurch gekennzeichnet,**
    **dass** für einen geographischen Bereich (M) eine Mehrzahl von Isoliniendateien (File A, B, C, D...) bzw. mehrere Sätze von Isoliniendateien vorhanden sind, die zur Erzeugung der Polygone bzw. Isolinien (1, 2, 3, 4...) auf der Anzeigeeinrichtung jeweils in Abhängigkeit des momentanen Abbildungsmaßstabs herangezogen werden.

Fig. I

M

M

Ob.Links

B

GeoGebiet.oben

I   II   III

GeoGebiet.links

IV  P  V   VI   GeoGebiet.rechts

VII  VIII  IX

GeoGebiet.unten

Unt.Rechts

Fig. 2

Fig. 3

M

Fig. 4

IV

ISO-Datei-Bezeichnung    Datei B
Länge/Breite Ob.Links:    129798/453995
Länge/Breite Unt.Rechts:  69798/513995
Größe:                    2°
Max. Punkte:              7389
Kacheln:                  9
[...]
Kachel IV:                Relativ-Pos. 1839
Farben:                   3
RGB₁                      205 190 56
RGB₂                      210 192 130
RGB₃                      225 210 210
Polygon 1:
Eckpunkte:                8
Farbe:                    RGB₁
Höhe:                     e₁
Unterpolygone:            2
Punkt 1:                  x₁y₁
Punkt 2:                  x₂y₂
[...]
Punkt 8:                  x₈y₈
(Unter-) Polygon 2:
Eckpunkte:                4
Farbe:                    RGB₂
Höhe:                     e₂
Punkt 1:                  x₁y₁
[...]
(Unter-) Polygon 3:
Eckpunkte:                4
Farbe:                    RGB₃
Höhe:                     e₃
Punkt 1:                  x₁y₁
[...]
Polygon 4:
Eckpunkte:                6
Farbe:                    RGB₁
Höhe:                     e₁
Unterpolygone:            0
Punkt 1:                  x₁y₁
Punkt 2:                  x₂y₂
[...]
Punkt 6:                  x₆y₆

Fig. 5

Fig. 6

Fig. 8

Fig. 7